# EUROPÄISCHE PATENTSCHRIFT

(11) **EP 2 012 966 B1**
(45) Veröffentlichungstag und Bekanntmachung des Hinweises auf die Patenterteilung: **29.07.2009**
(21) Anmeldenummer: 07724341.8
(22) Anmeldetag: 18.04.2007
(51) Int. Cl.: B23Q 16/06

(54) **RUNDSCHALTEINHEIT**
ROTARY INDEXING UNIT
UNITÉ DE TRANSFERT CIRCULAIRE

(30) Priorität: 21.04.2006 DE 102006019139
(43) Veröffentlichungstag der Anmeldung: 14.01.2009
(73) Patentinhaber: Friedemann Wagner GmbH, 78559 Gosheim (DE)
(72) Erfinder: WAGNER, Friedemann, 78559 Gosheim (DE)
(74) Vertreter: Neunert, Peter Andreas
(86) Internationale Anmeldenummer: PCT/EP2007/003404
(87) Internationale Veröffentlichungsnummer: WO 2007/121907

(56) Entgegenhaltungen:
- EP-A- 1 323 493
- EP-A2- 1 323 494
- US-A- 3 824 877

## Beschreibung

Die Erfindung betrifft eine Rundschalteinheit mit einem mittels eines in einem Gehäuse angeordneten Antriebes um eine Schwenkachse schwenkbarem Schwenkteller, wie z.B. aus der US 3 824 877 bekannt. Rundschalteinheiten werden u.a. als Werkstückträger oder Träger von Werkstückpaletten verwendet. Die einzelne Rundschalteinheit ist in der Regel ein Teil einer Mehrseitenbearbeitungsmaschine. Ggf. sitzen auch mehrere dieser Einheiten auf einem großen Rundschalttisch einer Rundtaktmaschine.

Eine Rundschalteinheit besitzt einen z.B. das Werkstück tragenden Schaltteller, der kontinuierlich z.B. über ein Schneckengetriebe oder diskontinuierlich z.B. über ein Zahnstangengetriebe angetrieben wird. Rundschalteinheiten mit letzterem Antrieb haben z.B. einen Schwenkbereich von 360 Winkelgraden. Der Schaltteller wird in bestimmten Teilschritten positionier- und wiederholgenau getaktet. In den gewählten Anhaltepositionen wird der Schaltteller arretiert.

Ist jedoch der Schaltteller mit einem Werkstück, das eine große Eigenmasse hat, beladen, kann es bei einem abrupten Abbremsen zu einer Schädigung im Getriebe des jeweiligen Antriebs kommen, sei es bei einem kontinuierlichen Antrieb aufgrund einer Antriebsselbsthemmung oder sei es bei einem diskontinuierlichen Antrieb aufgrund eines erreichten Endanschlags.

Der vorliegenden Erfindung liegt die Aufgabe zugrunde, eine Rundschalteinheit zu entwickeln, deren Antrieb vor derartigen Überlastungen geschützt ist. Dabei soll ohne eine Beeinträchtigung der Positionier- und Wiederholgenauigkeit der bisherige Bauraum der Rundschalteinheit beibehalten werden. Diese Aufgabe wird mit den Merkmalen des Anspruchs 1 gelöst. Dazu ist zwischen einem Abtriebselement des Antriebs und dem Schwenkteller mindestens ein Rastgesperre mit einer formschlüssigen, mit begrenzter Haltekraft ausgestatteten Sperrung angeordnet.

Bei einer derartigen Rundschalteinheit wird bei einer Überlastung der werkstücktragende Schwenkteller vom Antrieb der Rundschalteinheit abgekuppelt. Dazu dient als Überlastsicherung z.B. ein Mehrfachrastgesperre. Das Gesperre entsperrt sich beim Überschreiten einer z.B. konstruktiv vorgegebenen oder individuell vorgegebenen Halte- bzw. Verzögerungskraft. Durch das Entsperren kann sich der Schwenkteller ggf. zusätzlich bremsend noch ein Stück weit weiterdrehen. Auf diese Weise wird u.a. eine Beschädigung oder Zerstörung der Antriebsverzahnung verhindert.

Weitere Einzelheiten der Erfindung ergeben sich aus den Unteransprüchen und der nachfolgenden Beschreibung einer schematisch dargestellten Ausführungsform:
- Figur 1:: Rundschalteinheit im vertikalen Längsschnitt, wobei die Tellerrotationsachse in diesem Schnitt liegt;
- Figur 2:: Rundschalteinheit im vertikalen Teillängsschnitt;
- Figur 3:: wie Figur 2, jedoch mit betätigtem Kupplungsan trieb;
- Figur 4:: Überlastsicherung in Sperrlage;
- Figur 5:: Überlastsicherung beim Ausheben des Sperrers;

- Figur 6:: Überlastsicherung, entsperrt.

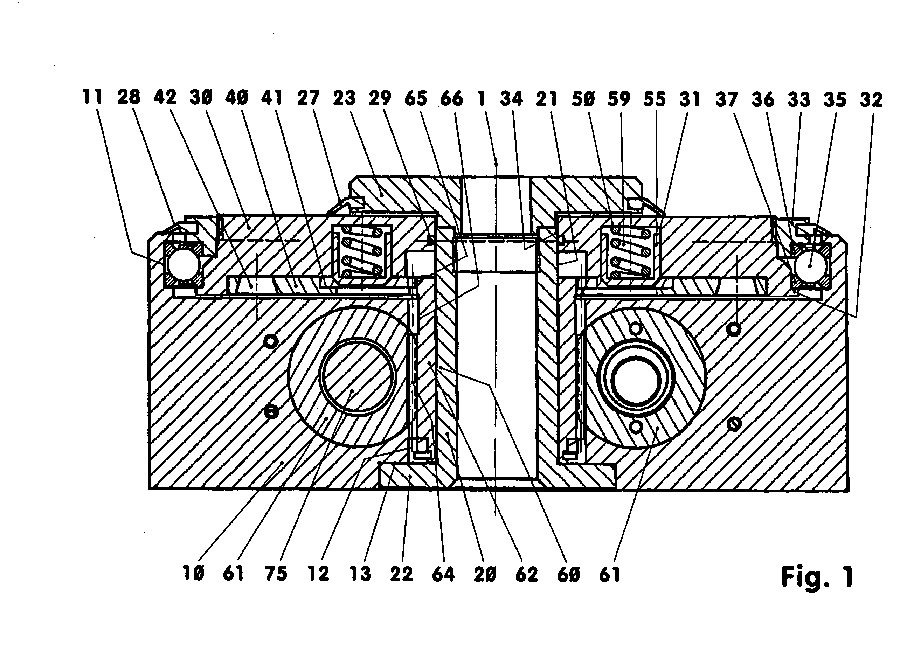

Die Figur 1 zeigt eine Rundschalteinheit mit einem Zahnstangenantrieb 60 und einer Überlastsicherung in Form eines Rastgesperres 50.

Die Rundschalteinheit hat einen in einem z.B. quaderförmigen Gehäuse 10 direkt gelagerten Schwenkteller 30. Zur Lagerung des Schwenktellers 30 hat das Gehäuse 10 eine ringnutförmige Ausnehmung 11, in der ein Drahtkugellager 35 oder ein vergleichbares Vierpunktlager sitzt. Die als Lageraußenring wirkenden Lagerdrähte sind dort gelagert. Der z.B. scheibenförmig gestaltete Schwenkteller 30 nimmt die Lagerdrähte 36, 37 auf, die die Funktion als Lagerinnenring übernehmen. Zur Aufnahme des unteren Lagerdrahtes 36 hat der Schwenkteller 30 einen Wellenbund 32. Der obere Lagerring 37 wird durch einen am Schwenkteller 30 angeordneten Einstellring 33 spieleinstellbar gehalten.

Das Gehäuse 10 hat u.a. eine zentrale Durchgangsbohrung 12 mit einem bodenseitigen Gehäusebund 13. Am Gehäusebund 13 ist zentriert ein hohler Lagerzapfen 20 mittels eines Zapfenflansches 22 befestigt. Der Lagerzapfen 20 durchdringt auch die zentrale Bohrung 34 des Schwenktellers 30. Im Bereich des Schwenktellers 30 ist der Lagerzapfen 20 über eine zentrierende Montagefuge mit einem flanschartigen Telleraufsatz 23 starr verbunden. Der ortsfeste Telleraufsatz 23 überdeckt zumindest bereichsweise das Zentrum des Schwenktellers 30.

Auf der zylindrischen Außenkontur 21 des Lagerzapfens 20 sitzt z.B. gleitgelagert ein Stirnrad 62. Das Stirnrad 62 kämmt im Ausführungsbeispiel mit zwei Zahnstangen 61. Beide zueinander parallel orientierte Zahnstangen 61 werden pneumatisch oder hydraulisch bewegt. In den Zahnstangen 61 sind pneumatische oder hydraulische Dämpfer 75 angeordnet, um u.a. die passive Schwenktellerbewegung im Bereich der Endlagen zu dämpfen.

Nach Figur 1 hat das Stirnrad 62 zwei durch eine Taille 66 unterteilte Verzahnungen 64, 65. Die hier untere Verzahnung 64 kämmt mit den Verzahnungen der Zahnstangen 61, während die obere Verzahnung 65 das Stirnrad 62 mit einer Abtriebsscheibe 51 formschlüssig kuppelt. Die Abtriebsscheibe 51 ist radial und axial gleitgelagert am Schwenkteller 30 angeordnet. Dazu sitzt sie zentriert an einer am Schwenkteller 30 befestigten Teilscheibe 40, die zur Abtriebsscheibe 51 hin einen Umgriffsbund 41 aufweist. Die Teilscheibe 40 ist mit dem Schwenkteller 30 starr verbunden. Auch weist sie in Figur 1 zwei konische Teilungsbohrungen 42 auf. Die Mittellinien dieser beiden Teilungsbohrungen 42 liegen mit der Schwenkachse 1 in einer Ebene. Zudem sind alle drei Mittellinien parallel zueinander ausgerichtet. Die Mittellinien der Teilungsbohrungen 42 haben gegenüber der Mittellinie 1 den gleichen Abstand.

Nach Figur 1 ist die Abtriebsscheibe 51 mit dem Schwenkteller 30 über zwei Rastgesperre 50 verrastet. Dazu hat der Schwenkteller 30 pro Rastgesperre 50 eine von seiner Rückseite aus eingearbeitete Sacklochbohrung 31. Gegenüber dieser Sacklochbohrung 31 hat die Abtriebsscheibe 51 eine kegelstumpfförmige Sperrausnehmung 52. Die Mittellinien der Sacklochbohrung 31 und der Ausnehmung 52 sind hier jeweils deckungsgleich.

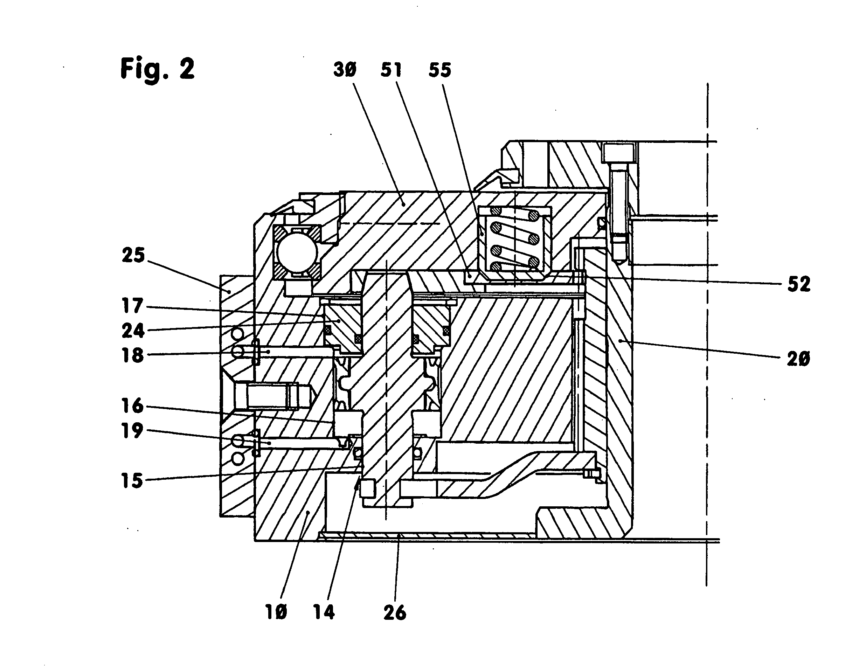

In der Sacklochbohrung 31 sitzt federbelastet ein topfförmiger Sperrerbolzen 55. Der Boden 56 des Sperrerbolzens 55 ist so angefast, dass er in Sperrstellung formgenau in die Sperrausnehmung 52 der Abtriebsscheibe 51 passt, vgl. Figur 2.

Der Schwenkteller 30 ist gegenüber dem ortsfesten Gehäuse 10 und dem damit starr verbundenen Telleraufsatz 23 mittels der von außen sichtbaren Lippendichtungen 27, 28 und einem O-Ring 29 abgedichtet.

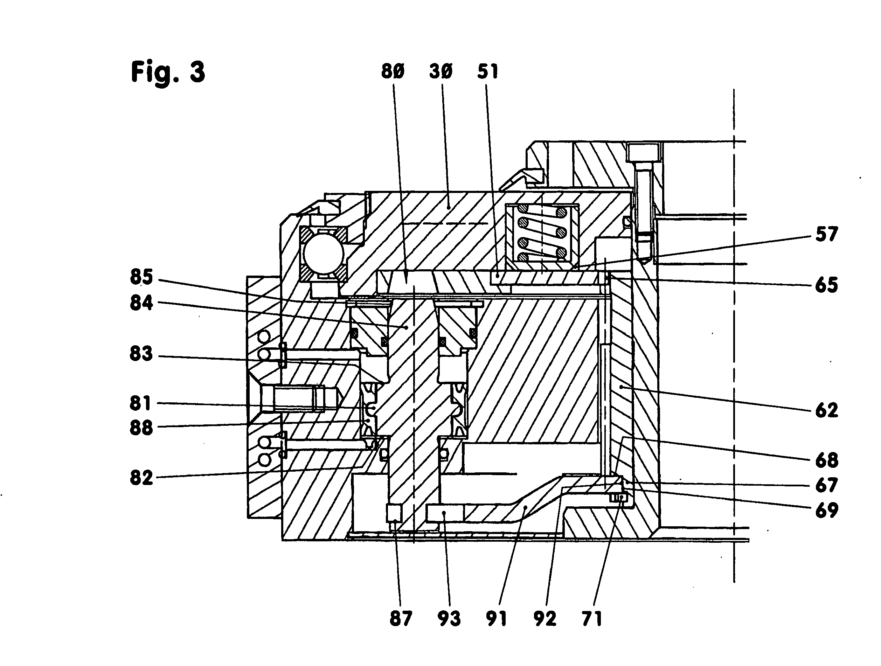

In den Figuren 2 und 3 ist die Rundschalteinheit in einer gegenüber der Figur 1 um 90 Winkelgrade geschwenkten Position halbseitig geschnitten dargestellt. In Figur 3 befindet sich das Stirnrad 62 - wie schon in der Figur 1 - in einer unteren Anschlagposition. Hierbei ist die Abtriebsscheibe 51 drehstarr mit dem Stirnrad 62 gekuppelt. Die stirnradseitige Kupplungsverzahnung 65 greift in die Verzahnung der Abtriebsscheibe 51 ein.

Am unteren Ende hat das Stirnrad 62 ein zylindrisches Endstück 67 mit einer Ringnut 69. Auf dem Endstück 67 sitzt ein Schaltbügel 91 über seine mittige Bohrung 92 mit Spiel. Axial wird der Schaltbügel 91 zwischen einem Wellenbund 68 und einem in der Ringnut 69 sitzenden Sicherungsring 71 gehalten. Der beidseits z-förmig gebogene Schaltbügel 91 endet an seinen freien Enden in einer Gabel 93. Letztere greift in eine ringnutförmige Schaltnut 87 einer Kolbenstange 84.

Diese Kolbenstange 84 gehört zu einem Kolben 81, der Teil eines Kupplungsantriebes 80 ist. Der ca. mittig auf der Kolbenstange 84 angeordnete Kolben 81 trägt an seinem oberen freien Ende einen Indexkonus 85.

Die Kolbenstange 84 und der Kolben 81 sitzen in einer Stufenbohrung 14 des Gehäuses 10. Die Mittellinie der Stufenbohrung 14 ist parallel zur Schwenkachse 1 der Rundschalteinheit ausgerichtet. Die Stufenbohrung 14 ist in drei Abschnitte aufgeteilt: den unteren Führungsabschnitt 15, den Zylinderabschnitt 16 und den Deckelabschnitt 17. Im Deckelabschnitt 17 sitzt ein ringförmiger Führungsdeckel 24. Er ist gegenüber der Stufenbohrung 14 und gegenüber der Kolbenstange 84 jeweils mit einem Dichtring abgedichtet. In der Bohrung des Führungsdeckels 24 und im unteren Führungsabschnitt 15 ist die Kolbenstange 84 geführt. Auch der Führungsabschnitt 15 weist einen Dichtring auf.

Im Zylinderabschnitt 16 bewegt sich der Kolben 81. In den oberen und den unteren Endbereich des Zylinderabschnittes 16 münden die Bohrungen 18, 19. Letztere werden wahlweise über eine Verteiler- oder Steuerplatte 25 zum Auf- oder Abwärtsfahren des Kolbens 81 mit Druckmittel versorgt. Nach Figur 3 befindet sich der Kolben 81 und die Kolbenstange 84 in einer unteren Position.

Wird die Kolbenunterseite 82 über die Bohrung 19 mit Druckmittel versorgt, so bewegt sich der Kolben 81 und die Kolbenstange 84 nach oben. Die Kolbenstange 84 zieht über die Schaltnut 87 den Schaltbügel 91 und damit auch das Stirnrad 62 nach oben. U.a. um ein Verkanten zu vermeiden, hat die Rundschalteinheit beispielsweise zwei einander gegenüberliegende Kupplungsantriebe 80.

Die Aufwärtsbewegung der Kolbenstange 84 ist erst beendet, wenn mindestens ein Indexkonus 85 der beiden Kupplungsantriebe 80 in die Teilungsbohrungen 42 einrasten, vgl. Figur 2. Damit ist der Schwenkteller 30 in einer von z.B. mehreren Vorzugsstellungen fixiert. Der Indexkonus 85 positioniert den Schwenkteller 30 präzise gegenüber dem Gehäuse 10. Ein mögliches Verzahnungsspiel im Antrieb 60 oder ein ggf. auftretendes Umkehrspiel hat keinen Einfluss auf die Wiederholgenauigkeit der.Lagefixierung.

Parallel zum Teilvorgang wird die Kupplungsverzahnung 65 des Stirnrades 62 nach oben aus der Verzahnung der Abtriebsscheibe 51 herausgeschoben. Der Antrieb 60 ist nun vom Schwenkteller 30 abgekuppelt.

Soll nun der Schwenkteller 30 wieder eingekuppelt werden, wird die Kolbenoberseite 83 des Kolbens 81 mit Druckmittel beaufschlagt. Der Kolben 81 fährt abwärts, löst die Indexverriegelung und kuppelt das Stirnrad 62 wieder mit der Abtriebsscheibe 51.

Die Rundschalteinheit hat eine mechanische Überlastsicherung in Form von zwei Rastgesperren 50. Die Rastgesperre 50 sollen verhindern, dass am oder auf dem Schwenkteller 30 gelagerte Werkstücke oder andere Bauteile aufgrund ihrer trägen Masse die Verzahnung des Antriebs 60 schädigen oder zerstören. Ein solcher Fall tritt ein, wenn sich die antreibenden Zahnstangen 61 ihrem jeweiligen Verfahrwegende nähern und die Antriebskräfte in Kombination mit den Dämpfwirkungen der Dämpfer 75 nicht ausreichen, um den beladenen Schwenkteller 30 bis zum Erreichen des Verfahrwegendes vollständig abzubremsen. In diesem Fall werden die sich gerade im Eingriff befindenden Zähne der Zahnstangen 61 und des Stirnrades 62 maximal auf Biegung belastet. Übersteigt die Zahnbiegespannung den zulässigen Grenzwert, brechen die Zähne in der Regel im Bereich der Zahnfüße.

Um dem vorzubeugen, greifen die Sperrerbolzen 55 des Schwenktellers 30, vgl. Figur 2, - bei Überlast lösbar - in die Sperrausnehmungen 52 der Abtriebsscheibe 51. Letztere hat im Zusammenhang mit der Überlastsicherung die Funktion einer Sperrscheibe.

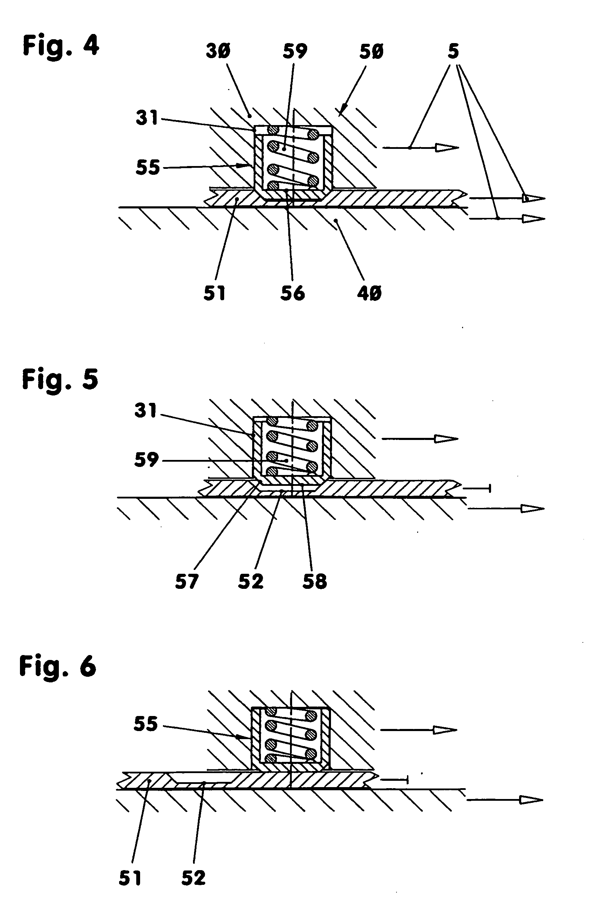

Die zylindrische Außenkontur des Sperrerbolzens 55 bildet mit der zylindrischen Wandung der führenden Sacklochbohrung 31 ein Schubgelenk. Die Bewegungsrichtung des Schubgelenks ist axial zur Sperrscheibe 51 ausgerichtet. Damit hat das Rastgesperre 50 keine Vorzugsrichtung. Der in die Sperrausnehmung 52 eingreifende Teil des Sperrerbolzens 55 ist ein Kegelstumpf mit einem Kegelwinkel von 90 Winkelgraden. Ausschließlich der Kegelstumpfabschnitt 57 liegt in der Sperrausnehmung 52 an, vgl. auch Figuren 5-7. Die untere - der Sperrscheibe 51 zugewandte - Stirnfläche 58 des Sperrerbolzens 55 ist plan gestaltet. Die Längsausdehnung des Sperrerbolzens 55 ist mindestens wenige Zehntel Millimeter kürzer als die Tiefe der Sacklochbohrung 31, so dass der Sperrerbolzen 55 vollständig in die Sacklochbohrung 31 eintauchen kann.

Im z.B. zylindrischen Innenraum des Sperrerbolzens 55 ist ein Federelement 59 in Form einer Schraubenfeder als Rastfeder angeordnet. Die Rastfeder stützt sich zwischen dem Boden der Sacklochbohrung 31 und dem Boden 56 des Sperrerbolzens 55 ab. Die Innenwandung des Sperrerbolzens 55 dient als Seitenführung für die Schraubenfeder 59. Ggf. kann der Sperrerbolzen 55 in seinem Innenraum auch einen zentralen Federführungsbolzen aufweisen. Die Schraubenfeder 59 kann durch die Variation der Windungszahl und/oder der Drahtstärke gezielt auf eine bestimmte Haltekraft ausgelegt werden. Auch kann die Haltekraft beispielsweise über eine hier nicht näher dargestellte Stellschraube individuell einstellbar sein, welche auf die Schraubenfeder 59 einwirkt und deren Vorspannkraft variabel vorgibt. Die Schraubenfeder 59 kann auch durch eine Gruppe von Federn ersetzt werden. So können z.B. Tellerfedern verschiedenfach gestapelt eingesetzt werden. Anstelle des mechanischen Federelements 59 kann auch ein pneumatisches oder ein hydropneumatisches Federelement verwendet werden.
Die Sperrausnehmung 52 hat eine kegelstumpfmantelförmige Wandung, deren Kegelwinkel ebenfalls 90 Winkelgrade beträgt. Entgegen den Darstellungen in den Figuren kann die einzelne Sperrausnehmung 52 die Sperrscheibe 51 vollständig durchdringen.

In den Figuren 4 bis 6 ist ein Rastgesperre 50 in drei Positionen dargestellt. Nach Figur 4 bewegt sich der Schwenkteller 30 zusammen mit dem Sperrerbolzen 55 der verrasteten Sperrscheibe 51 und der tragenden Teilscheibe 40 z.B. in Richtung 5.

Gemäß der Figur 5 schwenken der Schwenkteller 30, der Sperrerbolzen 55 und die Teilscheibe 40 weiter, obwohl die Sperrscheibe 51 vom Antrieb angehalten wurde. Der Sperrerbolzen 55 rutscht mit seinem Kegelstumpfabschnitt 57 an der Wandung der Sperrausnehmung 31 unter einem Zusammendrücken der Schraubenfeder 59 nach oben. Auf die linienhafte Kontaktfläche zwischen dem Kegelstumpfabschnitt 57 und der Sperrausnehmung 52 wirkt beim dargestellten Ausführungsbeispiel pro Rastgesperre 50 eine Kraft, die größer ist als die Summe aus der Federkraft und aus der in der Kontaktfläche vorhandenen Reibkraft.

Nach Figur 6 hat der Sperrerbolzen 55 die Sperrausnehmung 52 vollständig verlassen. Nur noch die plane Stirnfläche 58 liegt vollflächig reibend auf der Sperrscheibe 51 auf.
Nach dem Auslösen der Überlastsicherung, d.h. dem Entsperren des oder der Rastgesperre 50, wird der Schwenkteller 30 vor-oder zurückgedreht, bis der jeweilige Sperrerbolzen 55 in der entsprechenden Sperrausnehmung 52 der Sperrscheibe 51 einrastet.

Zur Änderung der Haltekraft kann der Kegelwinkel des Kegelstumpfabschnitts 57 vergrößert oder verkleinert werden. Ggf. kann auch anstelle des Kegelstumpfabschnitts 57 eine Kugelkalotte benutzt werden.

Bei der in den Figuren dargestellten Variante liegt der Sperrerbolzen 55 axial an der Sperrscheibe 51 an. Alternativ hierzu kann er auch radial oder tangential die Sperrscheibe 51 verrastend kontaktieren.

In einer anderen Variante kann der Sperrerbolzen 55 auch in Abtriebsscheibe 51 und die Sperrausnehmung 52 im Schwenkteller 30 angeordnet werden.

In den bisherigen Ausführungen ist der Sperrer - also hier der Sperrerbolzen 55 - als Führung ein Schubgelenk. Selbstverständlich kann der Sperrer z.B. ersatzweise in einen Drehschubgelenk, einen Schwenkgelenk, einen Schraubgelenk oder einem Biegefedergelenk geführt sein.

### Bezugszeichenliste

- 1: Schwenkachse der Rundschalteinheit, Mittellinie
- 5: Sperrrichtung
- 10: Gehäuse
- 11: Ausnehmung, ringnutförmig
- 12: Durchgangsbohrung
- 13: Gehäusebund
- 14: Stufenbohrung
- 15: Führungsabschnitt
- 16: Zylinderabschnitt
- 17: Deckelabschnitt
- 18: Bohrung, oben
- 19: Bohrung, unten
- 20: Lagerzapfen, hohl
- 21: Außenkontur, zylindrisch
- 22: Zapfenflansch
- 23: Telleraufsatz, Deckelflansch
- 24: Führungsdeckel
- 25: Verteilerplatte
- 26: Deckel
- 27, 28: Lippendichtungen
- 29: O-Ring
- 30: Schwenkteller
- 31: Sacklochbohrungen, Führungen
- 32: Wellenbund (für Wälzlager)
- 33: Einstellring
- 34: Bohrung
- 35: Drahtkugellager
- 36: Lagerdraht, unten; Teil des Innenrings
- 37: Lagerdraht, oben; Teil des Innenrings
- 40: Teilscheibe
- 41: Umgriffsbund
- 42: Teilungsbohrungen, konisch
- 50: Rastgesperre, Überlastsicherung
- 51: Sperrscheibe, Abtriebsscheibe
- 52: Sperrausnehmungen
- 55: Sperrerbolzen
- 56: Boden
- 57: Kegelstumpfabschnitt
- 58: Stirnfläche, plan
- 59: Federelement
- 60: Zahnstangenantrieb, Antrieb
- 61: Zahnstangen
- 62: Stirnrad, Zahnrad
- 64: Antriebsverzahnung
- 65: Kupplungsverzahnung
- 66: Taille
- 67: Endstück, zylindrisch
- 68: Wellenbund (unten)
- 69: Ringnut
- 71: Sicherungsring
- 75: Dämpfer
- 80: Kupplungsantrieb
- 81: Kolben
- 82: Kolbenunterseite
- 83: Kolbenoberseite
- 84: Kolbenstange,
- 85: Indexkonus
- 87: Schaltnut
- 88: Dichtring
- 91: Schaltbügel, gabelartig
- 92: Bohrung
- 93: Gabel

## Patentansprüche

1. Rundschalteinheit mit einem mittels eines in einem Gehäuse (10) angeordneten Antriebes (60) um eine Schwenkachse (1) schwenkbarem Schwenkteller (30),
**dadurch gekennzeichnet, dass** zwischen einem Abtriebselement (51) des Antriebs (60) und dem Schwenkteller (30) mindestens ein Rastgesperre (50) mit einer formschlüssigen, mit begrenzter Haltekraft ausgestatteten Sperrung angeordnet ist.

2. Rundschalteinheit gemäß Anspruch 1,
**dadurch gekennzeichnet, dass** das Rastgesperre (50) zwei Sperrrichtungen hat.

3. Rundschalteinheit gemäß Anspruch 1,
**dadurch gekennzeichnet, dass** das Rastgesperre als Sperrer eine Sperrscheibe (51) und als Sperrstück einen Sperrerbolzen (55) hat.

4. Rundschalteinheit gemäß Anspruch 3,
**dadurch gekennzeichnet, dass** der Sperrerbolzen (55) axial zur Sperrscheibe (51) angeordnet ist.

5. Rundschalteinheit gemäß Anspruch 3,
**dadurch gekennzeichnet, dass** der Sperrerbolzen (55) und seine Führung (31) ein Schubgelenk bilden.

6. Rundschalteinheit gemäß Anspruch 3,
**dadurch gekennzeichnet, dass** der Sperrerbolzen (55) die Form eines Topfes hat, in dessen Innenraum ein Federelement (59) als Sperrerfeder angeordnet ist.

7. Rundschalteinheit gemäß Anspruch 3,
**dadurch gekennzeichnet, dass** der Sperrerbolzen (55) im Schwenkteller (30) angeordnet ist und dass die Sperrscheibe das Abtriebselement (51) ist.

8. Rundschalteinheit gemäß Anspruch 1,
**dadurch gekennzeichnet, dass** der Antrieb (60) ein Zahnstangengetriebe aus mindestens einer Zahnstange (61) und einem mit dem Schwenkteller (30) kuppelbaren Zahnrad (62) umfasst.

9. Rundschalteinheit gemäß Anspruch 8,
**dadurch gekennzeichnet, dass** zum Hin- und Herschwenken des Schwenktellers (30) die Zahnstange (61) zumindest an Bereichen einer Stirnseite oder eines Bohrungsgrundes pneumatisch oder hydraulisch mit Druck beaufschlagt werden.

## Claims

1. A rotary indexing unit having a pivot plate (30) that can pivot around a pivot axis (1) by means of a drive (60) disposed in a housing (10),
**characterised in that** between an output element (51) of the drive (60) and the pivot plate (30) there is disposed at least one locking mechanism (50) with a positive-fit blocking device equipped with limited holding.

2. A rotary indexing unit according to Claim 1,
**characterised in that** the locking mechanism (50) has two locking directions.

3. A rotary indexing unit according to Claim 1,
**characterised in that** the locking mechanism has a locking disc (51) as a locking device and a lock bolt (55) as a catch/locking piece.

4. A rotary indexing unit according to Claim 3,
**characterised in that** the lock bolt (55) is disposed axially to the locking disc (51).

5. A rotary indexing unit according to Claim 3,
**characterised in that** the lock bolt (55) and its guide (31) form a sliding pair.

6. A rotary indexing unit according to Claim 3,
**characterised in that** the lock bolt (55) is shaped like a pot in the interior of which a spring clement (59) is disposed as a retaining spring.

7. A rotary indexing unit according to Claim 3,
**characterised in that** the lock bolt (55) is disposed in the pivot plate (55) and **in that** the locking disc is the output element (51).

8. A rotary indexing unit according to Claim 1,
**characterised in that** the drive (60) comprises a rack and pinion gear consisting of at least one toothed rack (61) and a pinion (62) that can be coupled to the pivot plate (30).

9. A rotary indexing unit according to Claim 8,
**characterised in that** the toothed rack (61) is pneumatically or hydraulically pressurised at least at areas of a front side or of the bottom of a hole so that the pivot plate (30) can pivot back and forth.

## Revendications

1. Plateau de transfert circulaire comportant un plateau pivotant (30) commandé en pivotement par un moyen d'entraînement (60) logé dans un boîtier (10) autour d'un axe de pivotement (1),
**caractérisé en ce qu'** au moins un verrou d'encliquetage (50) est prévu entre un élément entraîné (51) du moyen d'entraînement (60) et le plateau pivotant (30), ce verrou d'encliquetage assurant un blocage par une liaison par la forme avec une force de retenue limitée.

2. Plateau de transfert circulaire selon la revendication 1,
**caractérisé en ce que** le verrou d'encliquetage (50) présente deux directions de blocage.

3. Plateau de transfert circulaire selon la revendication 1,
**caractérisé en ce que** le verrou d'encliquetage comporte comme verrou, un disque de verrouillage (51) et comme pièce de verrouillage, un goujon de verrouillage (55).

4. Plateau de transfert circulaire selon la revendication 3,
**caractérisé en ce que** le goujon de verrouillage (55) est disposé axialement par rapport au disque de verrouillage (51).

5. Plateau de transfert circulaire selon la revendication 3,
**caractérisé en ce que** le goujon de verrouillage (55) et son guidage (31) forment une articulation de poussée.

6. Plateau de transfert circulaire selon la revendication 3,
**caractérisé en ce que** le goujon de verrouillage (55) a la forme d'un pot, dont la cavité loge un élément de ressort (51) comme ressort de verrouillage.

7. Plateau de transfert circulaire selon la revendication 3,
**caractérisé en ce que** le goujon de verrouillage (55) est prévu sur le plateau pivotant (30) et le disque de verrouillage est l'élément entraîné (51).

8. Plateau de transfert circulaire selon la revendication 1,
**caractérisé en ce que** le moyen d'entraînement (60) est une transmission à crémaillère se composant d'une crémaillère (61) et d'un pignon (62) couplé au plateau pivotant (30).

9. Plateau de transfert circulaire selon la revendication 8,
**caractérisé en ce que** pour assurer un basculement dans un sens ou dans l'autre du plateau pivotant (30), la crémaillère (61) est sollicitée en pression au moins dans les zones de sa face frontale ou d'un fond de perçage, par un moyen pneumatique ou hydraulique.
